# EUROPEAN PATENT APPLICATION

(11) **EP 4 275 482 A1**
(43) Date of publication of application: **15.11.2023**
(21) Application number: 22172790.2
(22) Date of filing: 11.05.2022
(51) Int. Cl.: A01G 9/02, A01G 13/02

(54) **A POT FOR CONTAINING PLANT ROOTS OF AT LEAST ONE PLANT AND GROWTH MEDIUM**

(71) Applicant: Nifty Gardening ApS, 9320 Hjallerup (DK)
(72) Inventor: Nielsen, Anne Nørgaard, 9320 Hjallerup (DK)
(74) Representative: Larsen & Birkeholm A/S

(57) **Abstract**

The invention relates to a pot for plants, the pot being made of a flexible and foldable material. The pots are particularly suitable for solitary trees and bushes for transplanting.

In particular, the invention relates to a pot (2) for containing plant roots of at least one plant (1) and growth medium (4), such as soil or potting mix, which pot is made of at least one piece of flexible material. The piece of flexible material may be in at least two different states:
- a first state, where the flexible material is shaped as one or forms a piece of a container with an upward opening through which the plant may protrude, and
- a second state, where the piece of flexible material is stretched out as a surface providing a cover around the plant, and
the flexible material comprises:
- either a cutting or an opening (3) stretching between the edge of the flexible material and a centrally located point, in which centrally located point the flexible material may surround a plant, or
- a marking of a cutting or opening (3), which may be cut or sliced, and which in the stretched-out form stretches between the edge of the flexible material and a centrally located point, in which centrally located point the flexible material may surround a plant.

## Description

The invention relates to a pot for plants, the pot being made of a flexible and foldable material. The pots are particularly suitable for solitary trees and bushes for transplanting.

### Field of the invention

The invention relates to a pot, that is used in connection with the production and transplanting of bushes and trees. The pot is produced from a material, such as weed control fabric, that may be folded around a portion of soil, and which covers the roots of the plant when the material is shaped as a pot or container.

When transplanting plants, the pot material may be unfolded in order to cover a suitable area around the plant that is placed in the pot and thus keep the covered area free of weeds for a period of time after the plant is transplanted.

The pot material may be made from a biodegradable material, which means that the material will disappear after transplanting the plant that was originally placed in the pot.

Use of the pot according to the invention will improve plant growth during production and in the subsequent establishment of the plant at the end destination (as well as make the transplanting of the plants faster).

### State of the art

Grow bags are commonly used in the production of trees and bushes. The grow bags are normally made of plastic, which make them lightweight and easy to store. However, in many places, these have been phased our due to their shape and because they are difficult to handle both when transplanting the plants and during production. Today, black pots made of hard plastic are most commonly used, however, they are not recyclable.

The pot made of hard plastic has been developed into having an air pruning effect, which provides a better root system for the plant. The pots have a large drainage effect and therefore cause a considerable waste of water and fertilizer.

Weed control fabric is commonly used in gardening and horticulture, but most of these are not biodegradable and therefore, it is therefore necessary to remove the weed control fabric as soon as it has served its purpose. Weed control fabric is usually provided in a roll allowing the customer to shape and fit the size of the fabric to the necessary area to be covered around the plant after transplanting it.

Today, there are many different types of plastic tree-rings on the market for covering stand-alone plants, such as trees, which tree-rings are placed around the trunk of the tree. The problem with the known plastic tree-rings is that they do not automatically follow the growth of the tree and therefore, they can end up harming the tree. The rings only cover a limited area under the tree, but in order for the tree to fully develop, it should preferably be free of weeds in a diameter of 1 meter, and none of the existing tree rings provide such a coverage.

Bark chipping is commonly used for covering plants in order to reduce weed growth. It is often used in combination with weed control fabric. If the chosen weed control fabric is not biodegradable, the bark chipping will degrade/decompose on top of the weed control fabric, and it must therefore be removed before refilling the bark chipping.

Today, several new fabric pots are available on the market. Their only function is to be a pot, but it is known that growing up in breathable material provides improved growing conditions for a plant.

WO 2020/166862 A1 relates to a non-woven flowerpot and discloses a pot for containing plant roots of a plant and growth medium, where the pot is made of at least one piece of flexible material, and the flexible material is shaped as a container with an upward opening through which the plant may protrude. The flowerpot is made of a flexible material, where the piece of flexible material is stretched out as a surface. The flexible material comprises a cutting, which in the stretched-out form stretches between the edge of the flexible material and a centrally located point, in which centrally located point the flexible material may surround a plant. The flexible material comprises a marking of a cutting, which may be cut or sliced, and which in the stretched-out form stretches between the edge of the flexible material and a centrally located point, in which centrally located point the flexible material may surround a plant. The flowerpot of this document cannot be rearranged to be a cover of an area around the plant after transplanting.

### Description of the invention

The present invention comprises a pot, which is made of a flexible and preferably air permeable material, such as e.g. weed control fabric.

The invention may remove the use of plastic in plant production, such as the use of plastic grow bags and ordinary pots prior to transplanting the plant and the use of plastic covers, such as plastic tree-rings and weed control fabric for weed control after transplanting a plant.

The invention makes is easy for the user to cover an area surrounding the plant after transplanting it, which provides the plant with the best growing conditions after it has been transplanted. The size of the flexible material, which constitutes the cover, will normally be adjusted to the needs of the plants. It will not be necessary to subsequently monitor the cover since it will adjust to the growth of the plant. If the flexible material is produced from a biodegradable material, it never needs to be removed, since it decomposes in the soil after transplanting the plant.

The purpose of the present invention is to avoid the use of plastic and to obtain a better growth for the plant in production, where the plant is in a pot, as well as after transplanting the plant, where it is to be established.

In plant production, the use of this invention will enable the plant to obtain a more branched and thus better root system by exposing it to air pruning, since the flexible material is normally air permeable. The plant is also less exposed to stress by growing in a lower soil temperature than the temperatures obtained in traditional black plastic pots.

By using the present invention, overwatering may also be avoided as well as anaerobe conditions and plant diseases that occur due to lack of air supply to the roots of the plant.

Once the plant is transplanted, the invention will prevent weeds from stealing nutrition from the new plant.

The invention makes it easy to cover an area, which is adjusted to a specific plant or plant type, without the need for the consumer to have specific knowledge in that area.

The pot according to the invention makes the production and establishment of plants sustainable and efficient.

The invention pertains to a pot for containing plant roots of at least one plant and a growth medium, such as soil or potting mix, where the pot is made of at least one piece of flexible material, which piece of flexible material may be in at least two different states: a first state, where the flexible material is shaped as one or constitutes a piece of a container with an upward opening through which the plant may protrude, and a second state, where the piece of the flexible material is stretched out as a surface. The size of the at least one piece of material or the size of the more than one pieces of material constituting the container is configured or adapted to cover an area around the plant after transplanting the plant where the size of the area is adapted to the type of plant grown in the container.

According to an embodiment of the invention, the pot may be constituted by two separate pieces of flexible material.

According to an embodiment of the invention, in the first state, the pot comprises means for fixation of one or more pieces of flexible material. Normally, the fixation means will fixate two or more layers of flexible material in relation to each other to prevent the layers from moving relative to each other in the first state. These means for fixation may be e.g. stables, glue, pegs/soil pins or thread/string.

In a particularly preferred embodiment, the pot consists of one or more pieces of flexible material only and means for fixation.

According to an embodiment of the invention, the flexible material may be a biodegradable material. The flexible material may sustain its function for a minimum of 2 year even though it is biodegradable.

According to an embodiment of the invention, the flexible material may cover at least 0.5 m², or at least 0.75 m², or at least 1 m² in the stretched-out form, and/or the flexible material may cover a maximum of 10 m², or a maximum of5 m², or a maximum of 2 m² in the stretched-out form.

According to an embodiment of the invention , the flexible material may comprise a cutting or an opening which, in the stretched-out form, stretches between the edge of the flexible material and a centrally located point, in which centrally located point the flexible material may surround a plant.

According to an embodiment of the invention, the flexible material may comprise a marking of a cutting or opening, which may be cut or sliced, and which in the stretched-out form stretches along the edge of the material and a centrally located point, in which centrally located point the flexible material may surround a plant.

According to an embodiment of the invention, the flexible material may be produced from a material, which has a density strong enough to prevent the growth of weeds or other undesired plants when positioned as a layer on the ground.

According to an embodiment of the invention, the flexible material may be flexible to an extent that the part of the flexible material covering the plant when it is transplanted adapts to the plant as the plant grows.

According to an embodiment of the invention, the flexible material may constitute a square or a circular surface in the stretched-out form i.e. in the second state.

According to an embodiment of the invention, the flexible material may be foldable and in the first state, the material is folded into a special unit with a flat bottom and an open top, such as a box or a cylinder or a conical frustum.

According to an embodiment of the invention, the pot (2) may comprise a hank or a handle (6) forming and enclosed ring, the ring may extend both above the upper edge of the pot (2) where it forms one or more handles (6) and below the bottom of the pot (2) where it constitute a support. The enclosed ring may extend above the upper edge of the pot (2) at two positions placed at opposite sides of the pot (2). Further, the support below the bottom of the pot (2) may be formed by two strings or bands of ring material either placed in approximately parallel positions or placed in crossing positions.

### List of figures

Figure 1 shows an embodiment of a pot according to the invention in a first state and illustrates the invention in a form containing plant roots and growth medium.
Figure 2 shows the same embodiment of a pot as in fig. 1 in a second state illustrating the invention in a stretched-out format, covering the surface closest to the plant.
Figures 3A-3E show an embodiment of a pot according to the invention, which is made from a square piece of flexible material.
Figures 4A-4D show embodiments of a pot according to the invention comprising a hank or a double handle.

### Detailed description of the invention

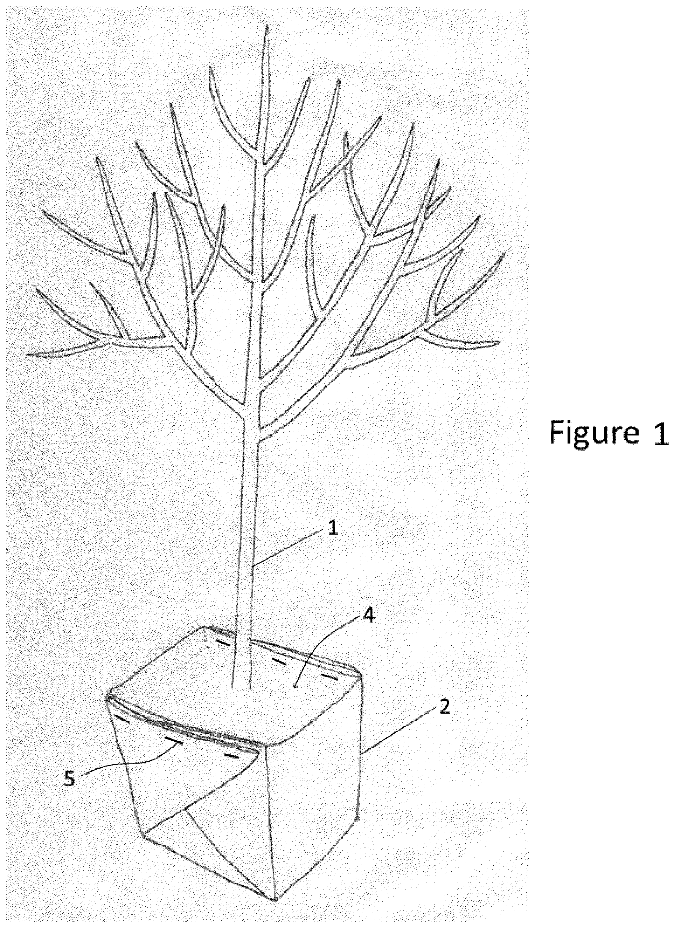

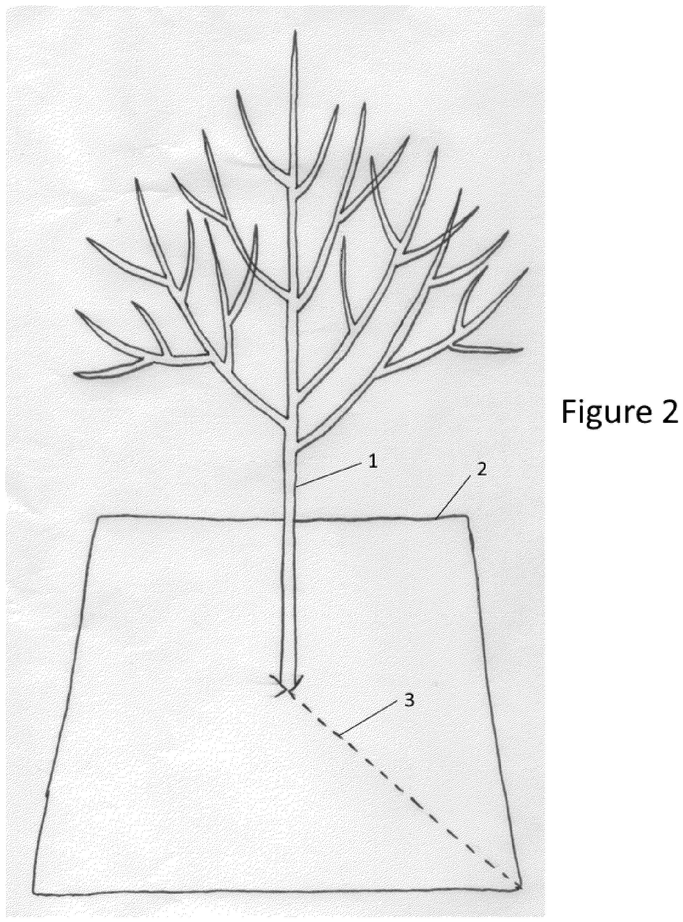

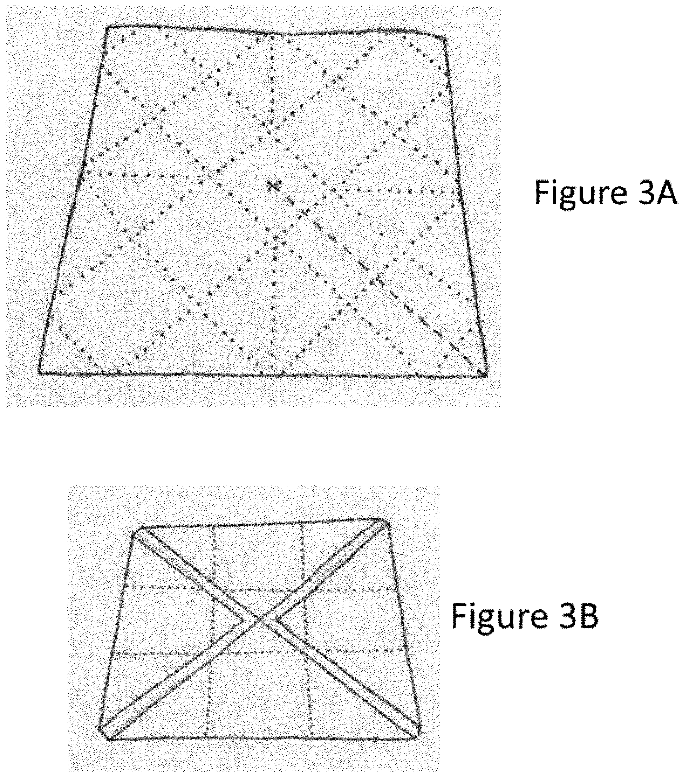

Figure 1 and figure 2 show a pot 2, which may contain roots and a least a plant 1, and a growth medium 4, such as soil or potting mix. The pot is made of a flexible material, which may be in at least to states:
- a first state as shown in fig. 1, where the flexible material is shaped as a spacious unit or container with an opening upwards through which the plant may protrude, and
- a second state as shown in fig. 2 and fig. 3A, where the flexible material is stretched out as a surface.

The flexible material may be foldable, enabling the material in the first state to be folded into a spacious unit with a flat bottom and an open top, such as a box or a cylinder or a conical frustum.

In the first state, two or more layers of the flexible material are normally fixated in relation to each other with fixation means 5. They may e.g. be stabled or glued or tied or sewn, allowing the spacious unit to maintain its shape, even when moved around. An advantage of sewing the material is that the sewing may be removed completely or partially by pulling a loose thread in the sewing, which removes the need for tools, when the pot is to be brought from the first state to the second state.

When the flexible material is in the second state, i.e. in the stretched-out form, the material will normally constitute a square or a circular surface. The size of the flexible material in the stretched-out form will normally be adjusted to the plant contained in the pot, but normally covers at least 0.5 m², or at least 0.75 m², or at least 1 m². A single plant rarely needs more cover surrounding it than 1 m². Thus, normally, the flexible material in the stretched-out form will not cover more than a maximum of 1-2 m², but the size of the flexible material may be adjusted to specific needs.

The flexible material may be produces from a biodegradable or compostable material, that does not need to be removed but, but will disappear by itself when the transplanted plant is established, which is normally after approx. 2 years.

When the flexible material is mounted around the plant in the second state, the flexible material is provided with a cutting or an opening 3 stretching between the edge of the flexible material and a centrally located point in the flexible material.

The centrally located point indicates the most appropriate place for the flexible material to surround a plant after transplanting it.

The flexible material may be provided with a cutting or an opening 3, when it is in the first state, where the flexible material constitutes a spacious unit, but it may be advantageous to apply the cutting or opening 3 after the flexible material has been stretched out, since this will increase the durability of the spacious unit. If it is preferred that the flexible material does not have a cutting in the first state, the flexible material may comprise a marking, e.g. in the shape of a colored line showing where to preferably place a cutting or opening when the flexible material is to be used in the stretched-out form and placed around a plant.

The flexible material is produced from a material which has a density strong enough to prevent the growth of weeds or other undesired plants near the transplanted plant. The material may e.g. be the same material as used in traditional weed control fabric.

Figures 3A-3E shows an embodiment of a pot according to the invention which is formed by and approximately square piece of flexible material. Cf. this embodiment, the flexible material has been folded and stabled to constitute a box-shaped unit with a flat bottom and an open top.

Fig. 3A shows a pot in the second state, where the flexible material is in the stretched-out form, where the folding lines are marked with dots and the cutting line 3 is marked with lines. Normally, the folding lines are not marked on the finished product, and these are only marked on the figures to show the folding procedure of this embodiment.

Fig. 3B shows the first step of the folding of the flexible material, where each of the 4 corners fold into the center.

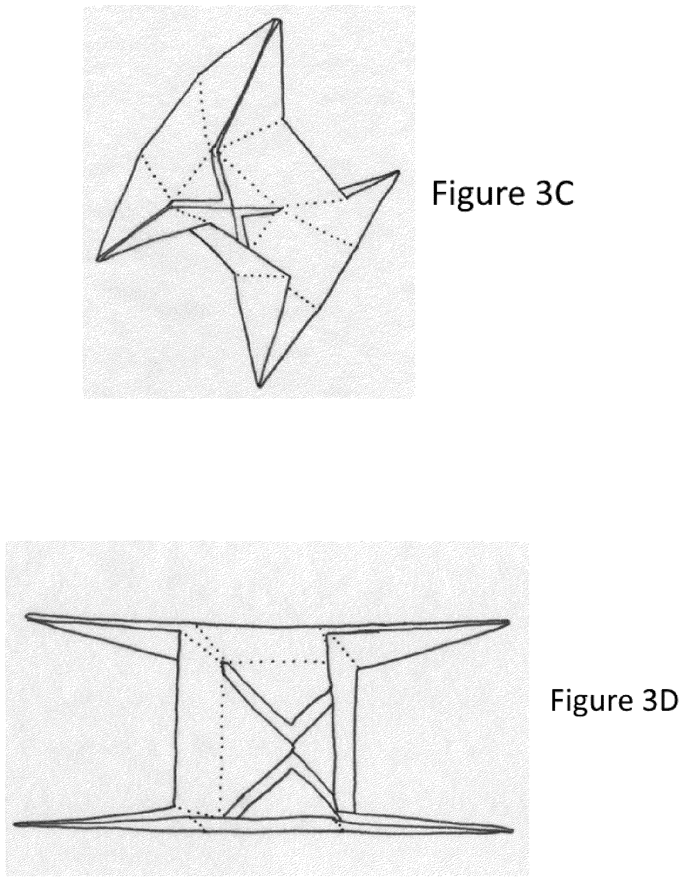

Fig. 3C shows a second step of the folding of the flexible material, where opposite sides in the finished box are raised.

Fig. 3D shows a third step of the folding of the flexible material, where the opposite sides in the finished box have been placed so that they are mutually parallel and the excess corner pieces also are placed in parallel.

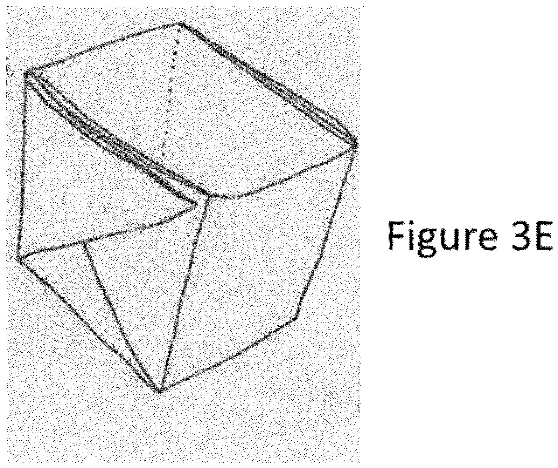

Fig. 3E shows the finished box, where the excess corner pieces are folded in along two opposite sides of the box, in order to obtain a spacious box with a square bottom and an open top.

By folding the pot in this way, each side of the pot will be constituted by at least two layers of flexible material.

The pot may be provided with or comprise a hank or a handle. Especially if the pot is used for trees or other large plants, it is advantageous to provide the pot with a hank or a handle.

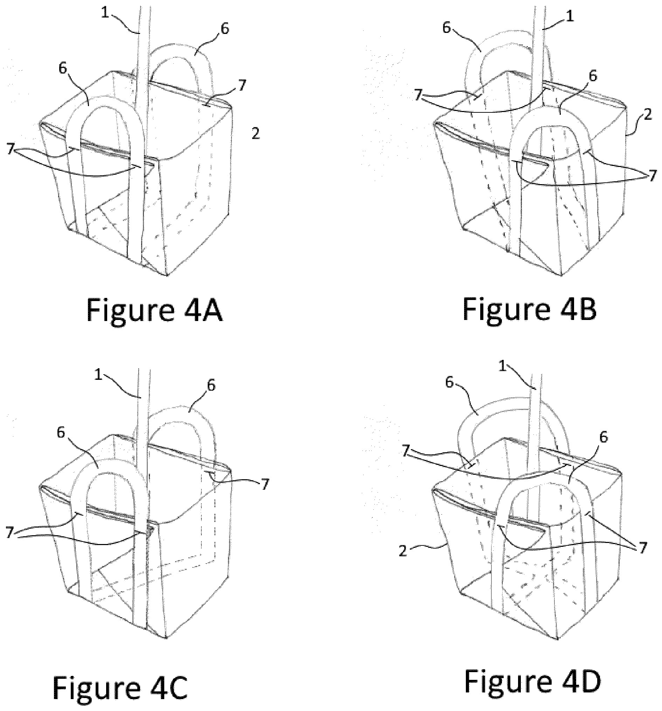

Figs. 4A-4D shows embodiments of a double handle 6 comprising one long piece of material forming an enclosed circle. The long piece of material extends as two oppositely positioned handles 6 above the upper edge of the pot 2, while the same long piece of material supports the pot below the bottom by two strings or bands of material. The support below the bottom may be constituted of two approximately parallel parts of the material constituting the hank or handle 6 as disclosed in figs. 4A and 4B, or the support below the bottom may be constituted of crossing parts of the material constituting the hank or handle 6 as disclosed in figs. 4C and 4D. Also, the two opposite positions may comprise two opposite flat sides of the pot 2 as disclosed in figs. 4A and 4C, or the two opposite positions may comprise two corners of the pot 2 as disclosed in figs. 4B and 4D.

The hank or handle 6 may be attached to the pot by fastening means 7 - either releasably or unreleasably - and the fastening means 7 may comprise stabling or gluing or tying or sewing. The hank or handle 6 may be fastened to the pot 2 at one, two, three or four points or at several points, or along the complete surface contacting the pot 2.

The hank or handles 6 shown in figs. 4A-4D are fastened by fastening means 7 at four positions close to the upper edge of the pot 2.

In general, a hank or a handle may be made of the same flexible material as the pot or another biodegradable material which makes it possible to attach the hank or handle to the pot before or during the first state.

Alternatively, a hank or a handle may be made of a different material e.g. a more durable material and in this case, it would be advantageous to remove the hank or handle before bringing the pot to the second state and optionally re-use the hank or handle. In this case, the hank or handle may comprise ropes or metal or metal-enforced material which need not be flexible or very flexible as the hank or handle is removed before the pot is brought into the second state.

## Claims

1. A pot (2) for containing plant roots of at least one plant (1) and growth medium (4), such as soil or potting mix, which pot is made of at least one piece of flexible material, **characterized in that** the piece of flexible material may be in at least two different states:
- a first state, where the flexible material is shaped as one or forms a piece of a container with an upward opening through which the plant may protrude, and
- a second state, where the piece of flexible material is stretched out as a surface providing a cover around the plant, and
the flexible material comprises:
- either a cutting or an opening (3) stretching between the edge of the flexible material and a centrally located point, in which centrally located point the flexible material may surround a plant, or
- a marking of a cutting or opening (3), which may be cut or sliced, and which in the stretched-out form stretches between the edge of the flexible material and a centrally located point, in which centrally located point the flexible material may surround a plant.

2. A pot according to claim 1, where the flexible material is a biodegradable and/or compostable material.

3. A pot according to claims 2, where the flexible material may sustain its function for a minimum of 2 year.

4. A pot according to any of the preceding claims, where the flexible material in the stretched-out form covers at least 0.5 m², or at least 0,75 m², or at least 1 m², and/or where the flexible material in the stretched-out form covers a maximum of 10 m², or a maximum of 5 m², or a maximum of 2 m².

5. A pot according to any of the preceding claims, where the flexible material is produced from a material, which has a density strong enough to prevent the growth of weeds or other undesired plants.

6. A pot according to any of the preceding claims, where the flexible material is flexible to an extent that the part of the flexible material surrounding the plant when it is transplanted adapts to the plant as the plant grows.

7. A pot according to any of the preceding claims, where the flexible material in the stretched-out form forms a square or a circular surface.

8. A pot according to any of the preceding claims, where the flexible material is foldable and in the first state, the material is folded into a spacious unit with a flat bottom and an open top, such as a box or a cylinder or a conical frustum.

9. A pot according to any of the preceding claims, wherein the flexible material is air permeable.

10. A pot according to any of the preceding claims, wherein the pot is constituted of one piece of flexible material or of two separate pieces of flexible material.

11. A pot according to any of the preceding claims, wherein two or more layers of the flexible material in the first state are fixated in relation to each other with fixation means (5), which fixation means may be stables or glue or means for tying up or sewing.

12. A pot according to any of the preceding claims, wherein the pot (2) comprises a hank or a handle (6) forming and enclosed ring, the ring extends both above the upper edge of the pot (2) where it forms one or more handles (6) and below the bottom of the pot (2) where it constitute a support.

13. A pot according to claim 12, wherein the enclosed ring extends above the upper edge of the pot (2) at two positions placed at opposite sides of the pot (2).

14. A pot according to claim 12 or 13, wherein the support below the bottom of the pot (2) is formed by two strings or bands of ring material either placed in approximately parallel positions or placed in crossing positions.

15. A pot according to any of the preceding claims, wherein the pot (2) comprises a hank or a handle (6) attached to the pot (2) with fastening means (7) in the first state, which fastening means (7) are released and/or removed in the second state making to release or remove the hank or handle (6) from the pot (2) in the second state.
